# EUROPEAN PATENT APPLICATION

(11) **EP 1 614 778 A1**
(43) Date of publication of application: **11.01.2006**
(21) Application number: 04076980.4
(22) Date of filing: 08.07.2004
(51) Int. Cl.: D01F 6/74, D01D 10/02, C08J 5/18

(54) **Process for obtaining a synthetic organic aromatic heterocyclic rod fiber or film with high tensile strength and/or modulus**

(71) Applicant: Magellan Systems International, LLC, Bethesda, MD 20814 (US)
(72) Inventor: Sikkema, Doetze Jakob, Richmond, Virginia 23237 (US); Northolt, Maurits Gerhard, 6881 KL Velp (NL); Zegers, Hendrikus Cornellis, 6922 JL Duiven (NL)
(74) Representative: Volmer, Johannes Cornelis

(57) **Abstract**

A process for obtaining a synthetic organic aromatic heterocyclic rod fiber or film with high tensile strength and/or modulus comprising spinning a synthetic organic polymer to a aromatic heterocyclic rod fiber or obtaining the synthetic organic polymer as an aromatic heterocyclic rod film, followed by loading the fiber or film in the presence of a processing aid, at a temperature below the boiling point of the processing aid and above -50° C, at a tension of 10 to 95 % of the fiber or film breaking strength, followed by removing the processing aid and/or performing a heating step at a tension of 10 to 95 % of the fiber or film breaking strength.

## Description

The invention pertains to a fiber or film and a process for obtaining a synthetic aromatic heterocyclic rod organic fiber or film with high tensile strength and/or modulus.

For many high-tech applications it is important to use fibers and films with high tensile strength and/or modulus. These so-called high-performance fibers or films may be organic-based (e.g. para-aramid fibers and films or carbon fibers) or inorganic (e.g. E-glass fibers, silicon carbide fibers). They find application in numerous specialty products for automotive, aerospace and ballistic applications, reinforcement of constructions, offshore exploration, protective apparel, sports equipment, and thermal insulation. Each type of high-performance fiber or film excels in certain niche applications.

A special type of high performance fibers or films is high-modulus high-tenacity fibers or films. Organic members of this group contain covalent (one-dimensional) chains that are held together by intermolecular interactions. Typical examples are ultra-high-molecular weight poly ethylene (UHMW PE) like Dyneema® and Spectra®, para-aramids like Kevlar®, Technora® and Twaron®, aromatic homocyclic polyesters like Vectran®, and aromatic heterocyclic rods like PBO (Zylon®) and PIPD (M5) based on pyridobisimadazole.
PBO combines high modulus and tenacity with good thermal properties and flexibility, making it suitable in ballistics, flame resistant work wear for fire fighters and heat resistant felts. Application in structural composites, however, is limited by its low compressive strength. The new fiber or film M5 is a PBO-like fiber or film with significantly improved compression behavior.
Up to now it is believed that the above fibers or films span an impressive range in tensile properties, some of them even within one fiber or film type. Nevertheless, when the tensile strengths could be increased further, a substantial improvement could be obtained, even making available new applications that are not yet possible with the existing high-performance fibers or films. For PIPD the conventional technique of spinning, air gap drawing, and heat treatment has been described in EP 0,696,297, which technique is considered the closest prior art.

It was now found that a substantial increase of tensile strength, up to a factor 2 or even more, and an increase of the modulus was obtained by using a novel process for obtaining a synthetic organic aromatic heterocyclic rod fiber or film with high tensile strength and/or modulus comprising spinning a synthetic organic polymer to a aromatic heterocyclic rod fiber or obtaining the synthetic organic polymer as an aromatic heterocyclic rod film (for instance by molding or by using a doctor's blade), followed by loading the fiber or film in the presence of a processing aid, at a temperature below the boiling point of the processing aid and above -50º C, at a tension of 10 to 95 % of the fiber or film breaking strength, followed by removing the processing aid and/or performing a heating step at a tension of 10 to 95 % of the fiber or film breaking strength.

According to the existing methods, the orientation and the modulus of fibers and films is improved by a heat treatment under tension. So, for instance, an oven is used for fibers, which consists of a (quartz) tube. Into the tube, slightly above the bottom, a flow of nitrogen is introduced. Its flow rate can be controlled and it can be heated. The nitrogen flow is used to heat the fiber and in addition serves as an inert atmosphere. The fiber is suspended from an upper-clamp, through the oven. To its lower end, a weight is connected which applies the tension during the treatment. Both, oven and upper-clamp are mounted to a solid frame. The second clamp (the under-clamp) was mounted on the frame, below the first clamp (upper-clamp) and the heating zone. With this under-clamp closed, the length of the piece of fiber in the device is fixed and does not change during the treatment. Further, a facility to cool down the nitrogen flow to temperatures below room temperature was introduced.

According to the prior art methods a specific after-treatment can be carried out as follows. For instance, as-spun PIPD fiber, conditioned at 21°C and a relative humidity of 65 %, was clamped into the device as described above. Initially, no tension was applied. Then, the tension was applied and subsequently the fiber was subjected to one, but preferably more treatments at different temperatures. The best results were achieved with a tension of 300 mN/tex and three periods of heating of 30 sec, at 150° C, 350° C, and 550° C, respectively. For the evaluation of the mechanical properties, only the part of the fiber was used that was in the heated area of the oven.
According to the invention initially no tension was applied. Then subsequently, the fiber can optionally be cooled down, preferably at room temperature, and more preferably lower than 20º C, for instance to 5° C, a tension was applied to the fiber or film (for instance, about 800 mN/tex) and this tension and temperature were maintained for a short period, usually less than 1 min, for example for 6 sec. Thereafter, the under-clamp was closed i.e. the strain (elongation) of the fiber or film was fixed and heat treatment was started. In this particular case the temperature was raised, for instance from 5° C to 500° C in 1 to 600 sec, or preferably at room temperature to 350º C in 10 to 300 sec.
The mechanical properties of the fibers measured are filament properties. They are determined for 25 to 75 filaments by means of a Favimat™ (Textechno, Mönchengladbach, Germany). The average values of the breaking tension and the modulus of the filaments were found to be 3600 mN/tex and 320 GPa, respectively, measured as the average of 25-75 measurements on 25-75 filaments or on 25-75 parts of one or more filament. The original strength and modulus of the filaments was 2100 mN/tex and 170 GPa respectively. For films the measurements were done similarly as is known the skilled person.

In a preferred embodiment the process for making a fiber or film is further improved when the spun fiber is subjected to a treatment step with the processing aid in the gas or vapor phase at a temperature between 50º and 300º C, preferably between 80º and 100º C, between the loading and heating step, at a tension of 10-95% of the fiber or film breaking strength. This treatment with the processing aid in the gas or vapor phase enables the use of lower tension at the subsequent steps, thus leading to less breakage and less fluffs. Particularly, the loading step is then performed at lower tension with the same result of higher tension loading without applying the treatment with the processing aid in the gas or vapor phase, or at the same tension with higher tenacity and/or modulus than without applying the treatment with the processing aid in the gas or vapor phase. The treatment step with the processing aid in the gas or vapor phase and the heating step can be performed as a combined step wherein the fiber or film is first treated with the processing aid in the gas or vapor phase, followed by heating the fiber or film.

The method of the invention can be used for any aromatic heterocyclic rod fibers and films, more preferably PBO and PIPD. The linear density of the filaments is preferably 0.1 to 5000, for multifilaments preferably 0.5 to 5, more preferably 0.8 to 2 dtex.

The fibers contain one (monofilament) or at least two filaments (multifilament), specifically 2 to 5000, and more specifically 100 to 2000. Fibers with about 1000 filaments are commonly used.

The processing aid may be any inert liquid, such as water, acid (e.g. phosphoric acid, sulfuric acid), base (e.g. ammonia), aqueous salt solutions (e.g. sodium chloride, sodium sulfate), and organic compounds (e.g., ethanediol, methanol, ethanol, NMP). The processing aid is preferably an aqueous solution, and with more preference water. When the processing aid is water, the processing aid in the gas or vapor phase is steam.

For the method of the invention preferably as-spun fiber or as-obtained film, not having received any substantial thermal mechanical after-treatment, is used. When the fiber is produced by wet spinning or the film by molding, doctor's blade, or the like, and water or an aqueous solution is used as the coagulation medium and/or water or an aqueous solution is used for neutralization and washing, the as-spun fiber or as-obtained film may contain up to more than 100 wt.% of water and after conditioning at 21 °C and a relative humidity of 65 %, the water content of the as-spun fiber or as-obtained film may be more than 5 wt.%, typically more than 8 wt.%. In the case of PIPD the moisture content of the as-spun fiber or as-obtained film after conditioning is about 20-24 wt.% (based on dry polymer).

The tension applied during loading and the optional treatment with the processing aid in the gas or vapor phase is 10 to 95 % of the breaking strength of the fiber or film, which is higher than the conventionally used tensions. For instance, in a conventional spinning process of PIPD fibers the loading before drying does not exceed 5 % of the breaking strength of 2100 mN/tex. More preferably, the tension is at least 15 % and not more than 80 %, most preferably 25 to 60 % of the breaking strength of the as-spun fiber. For film similar tensions are used. If the treatment with the processing aid in the gas or vapor phase (for instance a steam treatment) is used the tension during this treatment is preferably 60-90% of the tension as used during the loading step. Preferably, the treatment with the processing aid in the gas or vapor phase is performed at constant length. Treatment times are between 0.1 sec and 1 h, preferably from 1 to 300 sec.

The temperature upon loading is below the boiling point of the processing aid and at least -50, preferably at least -18º C, and may be near or just above the temperature at which the local thermal transition of the fiber or film starts as determined with DMTA. A practical temperature is room temperature. Preferred temperatures are within the range between 0 and 20º C. For PIPD the local transition temperature starts at about -50° C. Typical loading times before heating are 0.1 to 1000 sec.

The heating step includes a temperature above the boiling point of the processing aid and may proceed at one temperature or in stages at different temperatures, at atmospheric pressure, at elevated pressure, or, at reduced pressure to promote the removal of the processing aid from the fiber or film. The heating step is preferably performed at a temperature of 100° C up to 50° C below the melting or decomposition temperature of the fiber, e.g. in the case of PIPD and PBO 120 to 450° C, more preferably 125 to 350° C, and most preferably, 130 to 250° C for a time between 0.1 sec to 1 h, preferably 1 to 300 sec. To prevent breaking of the fiber or film at high temperatures, it may be necessary to decrease the loading gradually during the heating step. In a preferred embodiment the processing aid is removed simultaneously with performing the heating step.
The invention further pertains to a synthetic organic PIPD fiber with a linear filament density between 0.1 and 500 dtex and a tensile strength higher than 3200 mN/tex. Preferably the tensile strength is higher than 3300, more preferably higher than 3500 mN/tex. The invention also pertains to a synthetic organic film wherein the modulus of the film is at least 14 GPa, preferably at least 20 GPa.

Favimat measurements were performed as follows.
25-75 filaments were randomly selected from a piece of 100 mm of a fiber and suspended in the fiber magazine of a Favimat (Textechno, Mönchengladbach, Germany) with pre-tension weights of 50 mg. From each filament the fineness and its force-elongation curve were determined automatically, using the test conditions:

| | |
|---|---|
| temperature | 21º C |
| relative humidity | 65 % |
| gauge length | 25.4 mm |
| fiber count pre-tension | 1.0 cN/tex |
| clamp speed | 2.54 mm/min |

As values for the mechanical properties, the average values of the properties of the filaments were taken.

The following results were obtained

| entry | loading step (6 sec) | | drying steps | | | tenacity (mN/tex) | elongation (%) | modulus GPa |
|---|---|---|---|---|---|---|---|---|
| | temperature (°C) | tension (mN/tex) | 30 sec at 150º C | 30 sec at 350º C | 30 sec at 550º C | | | |
| | | | tension (mN/tex) | tension (mN/tex) | tension (mN/tex) | | | |
| prior art | no treatment | | 300 | 300 | 300 | 2556 | 1.5 | 289 |
| 1 | 5 | 800 | fixed length | | | 3650 | 1.60 | 322 |
| 2 | 20 | 750 | fixed length | | | 3118 | 1.77 | 316 |
| 3 | -40 | 750 | fixed length | | | 3415 | 1.97 | 300 |
| 4 | 5 | 750 | fixed length, heated from 5-500° C in 600 sec | | | 3447 | 1.88 | 310 |
| as-spun | no treatment | | | | | 2075 | 2.83 | 167 |

## Claims

1. A process for obtaining a synthetic organic aromatic heterocyclic rod fiber or film with high tensile strength and/or modulus comprising spinning a synthetic organic polymer to a aromatic heterocyclic rod fiber or obtaining the synthetic organic polymer as an aromatic heterocyclic rod film, followed by loading the fiber or film in the presence of a processing aid, at a temperature below the boiling point of the processing aid and above -50º C, at a tension of 10 to 95 % of the fiber or film breaking strength, followed by removing the processing aid and/or performing a heating step at a tension of 10 to 95 % of the fiber or film breaking strength.

2. The process according to claim 1 wherein as-spun fiber or as-obtained film is subjected to the loading step.

3. The process according to claim 1 or 2 wherein the loading step is performed between -18 and room temperature, preferably between 0 and 20º C.

4. The process according to any one of claims 1 to 3 wherein the heating step is performed at 100º C or higher.

5. The process according to any one of claims 1 to 4 for making a fiber or film wherein the as-spun fiber or as-obtained film is subjected to a treatment step with the processing aid in the gas or vapor phase at a temperature between 50º and 300º C, preferably between 80º and 100º C, between the loading and heating step.

6. The process according to any one of claims 1 to 5 wherein the processing aid is an aqueous solution, preferably water.

7. The process according to any one of claims 1 to 6 wherein the processing aid is removed simultaneously with performing the heating step.

8. The process according to any one of claims 1 to 7 wherein the synthetic organic heterocyclic rod fiber or film is a PIPD fiber or film.

9. A synthetic organic fiber obtainable by the process of claim 1, **characterized in that** the fiber is PIPD with a linear filament density between 0.1 and 500 dtex and an average tensile strength higher than 3200 mN/tex.

10. The synthetic organic fiber of claim 9, wherein the average tensile strength is higher than 3500 mN/tex.

11. A synthetic organic film obtainable by the process of claim 1, **characterized in that** the modulus of the film is at least 14 GPa, preferably at least 20 GPa.
